# EUROPÄISCHE PATENTANMELDUNG

(11) **EP 1 464 917 A1**
(43) Veröffentlichungstag der Anmeldung: **06.10.2004**
(21) Anmeldenummer: 04005927.1
(22) Anmeldetag: 12.03.2004
(51) Int. Cl.: G01B 5/06

(54) **Messvorrichtung zur Erfassung der Dicke von Papierbögen oder ähnlichen flächigen Produkten**

(30) Priorität: 03.04.2003 DE 20305381 U
(71) Anmelder: Pfankuch Maschinen GmbH, 22926 Ahrensburg (DE)
(72) Erfinder: Zota, Heiko, 22926 Ahrensburg (DE)
(74) Vertreter: Fleck, Thomas, Dr. Dipl.-Chem.

(57) **Zusammenfassung**

Die Meßvorrichtung zur Erfassung der Dicke von Papierbögen oder ähnlichen flächigen Produkten, der die zu messenden Produkte fortlaufend auf einer Gegendruckfläche zugefördert werden, wird dadurch einfach und zuverlässig arbeitend gestaltet, daß über der Gegendruckfläche (3) eine auf dem zu messenden Produkt (2) zur Auflage kommende Meßrolle (5) an einem Hebel (8) drehbar gelagert ist, der um eine Welle (9) schwenkbar ist, deren Drehbewegung durch einen die Drehbewegung in eine elektrische Spannungsänderung umwandelnden Winkelgeber ausgewertet wird. Hierdurch ist es möglich, kleinste Höhenunterschiede zu erfassen und zu verstärken. Dieses wird durch die Umwandlung in eine Drehbewegung erreicht. Durch den Vergleich eines vorher gemessenen Ist-Wertes mit einem vorgegebenen Referenzwert werden Maßabweichungen deutlich sichtbar gemacht.

## Beschreibung

Die Erfindung betrifft eine Meßvorrichtung nach dem Oberbegriff des Anspruchs 1.

Derartige Meßvorrichtungen kommen in der druck- und papierverarbeitenden Industrie zum Einsatz. Sie dienen der Erfassung der Dicke von Papierbögen, insbesondere um die Zuförderung von zwei übereinander liegenden Papierbögen, sogenannten Doppelbögen auszuschließen. Diese bekannten Vorrichtungen arbeiten fotooptisch oder elektromechanisch. Bei dieser Art der Messung werden auch Eigenschaften der zu messenden Produkte erfaßt - wie beispielsweise Lichtdurchlässigkeit - die keine Aussage über die Dicke darstellen und so zu Fehlmessungen führen.

Der Erfindung liegt nun die Aufgabe zugrunde, eine einfache und zuverlässig arbeitende Meßvorrichtung der eingangs genannten Art zu schaffen.

Diese Aufgabe wird durch das Kennzeichen des Anspruches 1 gelöst.

Die erfindungsgemäße elektromechanische Meßvorrichtung bedient sich des Hebelgesetzes, um kleinste Höhenunterschiede zu erfassen und zu verstärken. Zu diesem Zwecke werden die Höhenunterschiede in eine Drehbewegung umgewandelt. Die Drehbewegung wird durch den Winkelgeber in ein elektrisches Signal umgewandelt. Durch den Vergleich eines vorher gemessenen Ist-Wertes mit einem vorgegebenen Referenzwert werden Maßabweichungen deutlich sichtbar gemacht. Es wird eine hohe Ansprechgenauigkeit erreicht, die die Differenz zwischen dem Referenzwert und dem Ist-Wert um einen Faktor von mehreren Millionen verstärkt. Dieses führt dazu, daß Drehbewegungen von weniger als 1/1000 Grad sicher erkannt werden. Meßfehler, die durch Temperaturänderungen entstehen, können intern kompensiert werden.

In vorteilhafterweise ist die Meßvorrichtung so ausgestaltet, wie in Anspruch 2 unter Schutz gestellt.

Im folgenden wird die Erfindung unter Hinweis auf die Zeichnung anhand eines Ausführungsbeispieles näher erläutert.

Es zeigt:
- Fig. 1: eine perspektivische Ansicht einer Ausführungsform einer Meßvorrichtung nach der Erfindung; und
- Fig. 2: einen Schnitt durch die Meßvorrichtung der Fig. 1.

Die Meßvorrichtung, die auch als elektromechanische "Doppelbogenkontrolle" bezeichnet werden kann, wird oberhalb einer Förderstrecke, die als Gegendruckfläche 3 bezeichnet ist, montiert. Das zu messende flächige Produkt 2, z.B. ein Papierbogen wird zwischen dem Gehäuse 4 der Meßvorrichtung und der Gegendruckfläche 3 zum Durchlaufen gebracht.

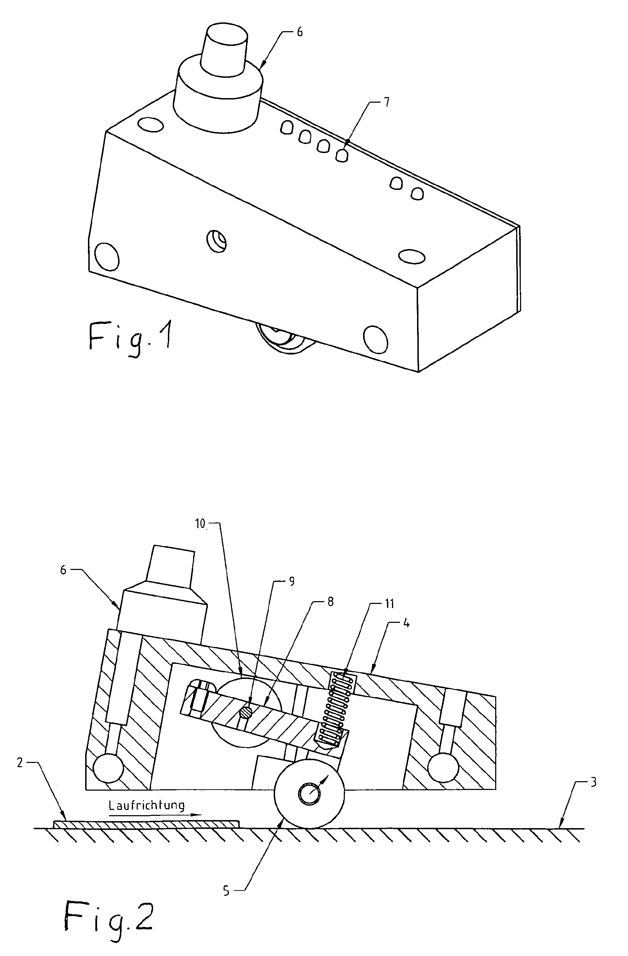

Eine Meßrolle 5, die auf der Gegendruckfläche 3 aufliegt, dient der Erfassung von dicken Unterschieden. Vor Aufnahme der Produktion wird ein zu messendes Produkt unterhalb der Meßrolle 5 positioniert. Mit Hilfe eines Potentiometers 6 (siehe Fig. 1) wird die Referenzhöhe (Stärke eines Produktes) voreingestellt. Der Abgleich der Referenzhöhe wird durch eine optische Anzeige 7 unterstützt.

Bei Aufnahme der Produktion kommen die zu messenden Produkte 2 unterhalb der Meßrolle 5 zum Durchlauf. Dabei wird die Meßrolle 5 auf die Produktoberseite angehoben. Über einen Hebel 8 wird der radial verlaufende Abhub der Meßrolle 5 auf die Welle 9 eines Winkelgebers 10 übertragen. Die Drehbewegung der Welle 9 wird in eine elektrische Spannungsänderung umgewandelt, die elektronisch ausgewertet wird.

Bedingt durch die Massenträgheit der Meßrolle 5 kommt es an den Vorderkanten der zu messenden Produkte bei höherer Fördergeschwindigkeit zu einem Überschwingen. Dieses Verhalten wird durch eine zwischen dem Hebel 8 und dem Gehäuse 8 gelagerte Druckfeder 11 kompensiert oder minimiert.

Mit Hilfe des Hebels, dessen Auf- und Abbewegung auf die Welle 9 als Drehbewegung übertragen wird, wird die Abweichung von der Referenzhöhe des zu messenden Produktes verstärkt. Die Drehbewegung der Welle 9 wird dann in ein elektrisches Signal (Spannungsänderung) umgewandelt und entsprechend angezeigt und ausgewertet.

## Patentansprüche

1. Meßvorrichtung zur Erfassung der Dicke von Papierbögen oder ähnlichen flächigen Produkten, der die zu messenden Produkte fortlaufend auf einer Gegendruckfläche zugefördert werden, **dadurch gekennzeichnet, daß** über der Gegendruckfläche (3) eine auf dem zu messenden Produkt (2) zur Auflage kommende Meßrolle (5) an einem Hebel (8) drehbar gelagert ist, der um eine Welle (9) schwenkbar ist, deren Drehbewegung durch einen die Drehbewegung in eine elektrische Spannungsänderung umwandelnden Winkelgeber ausgewertet wird.

2. Meßvorrichtung nach Anspruch 1, **dadurch gekennzeichnet, daß** der Hebel (8) gegen eine Druckfeder (11) zur Dämpfung von Überschwingungen schwenkbar ist.
